# EUROPEAN PATENT SPECIFICATION

(11) **EP 2 960 090 B1**
(45) Date of publication and mention of the grant of the patent: **01.01.2020**
(21) Application number: 15173044.7
(22) Date of filing: 22.06.2015
(51) Int. Cl.: B60K 1/04, B60K 11/04, B60R 13/08

(54) **COOLING APPARATUS OF INTERNAL COMBUSTION ENGINE FOR STRADDLE TYPE VEHICLE**
KÜHLVORRICHTUNG EINES VERBRENNUNGSMOTORS FÜR GRÄTSCHSITZFAHRZEUGE
APPAREIL DE REFROIDISSEMENT DE MOTEUR À COMBUSTION INTERNE POUR VÉHICULE DE TYPE CALIFOURCHON

(30) Priority: 26.06.2014 JP 2014131173
(43) Date of publication of application: 30.12.2015
(73) Proprietor: HONDA MOTOR CO., LTD., Tokyo, 107-8556 (JP)
(72) Inventor: INOMOTO, Yutaka, Saitama, 351-0193 (JP); KITO, Genichi, Saitama, 351-0193 (JP); NGARMLERTSIRICHAI, Adisorn, Saitama, 351-0193 (JP); TOMIOKA, Yusuke, Saitama, 351-0193 (JP); OBA, Yu, Saitama, 351-0193 (JP); KURAMITSU, Tomofumi, Saitama, 351-0193 (JP); UMEKI, Hiroshi, Saitama, 351-0193 (JP); NISHIMOTO, Taro, Saitama, 351-0193 (JP)
(74) Representative: Brevalex

(56) References cited:
- EP-A1- 0 604 937
- EP-A1- 1 992 514

## Description

### [Technical field]

The present invention relates to a cooling apparatus of an internal combustion engine for a straddle type vehicle, especially, relates to a cooling apparatus of a built-in radiator type internal combustion engine which is disposed on the side direction of the internal combustion engine in the width direction of the vehicle.

### [Background of the Invention]

As for an built-in radiator type internal combustion engine for straddle type vehicle, there has been typically known a cooling apparatus in which the crank shaft directing the width direction of the vehicle, is supported on the crank case of the internal combustion engine disposed below the passenger seat of the straddle type vehicle, a radiator is disposed such that a cooling fan provided on the end portion of the crank shaft is opposite to the core surface, the radiator cover covers the radiator from the outside in the width direction of the vehicle, and an opening (a cooling wind inlet opening) is provided on the radiator cover for introducing the cooling wind from the outside (for example, see Japanese Laid-Open Patent Publication No.2013-71492).

### [Description of the Related Art]

The built-in radiator type cooling apparatus disclosed in Japanese Laid-Open Patent Publication No.2013-71492 is configured such that the cooling wind inlet opening is formed on the approximately entire area of the radiator cover, which is opposite to the core surface of the radiator, so as to be largely opened. The louver is provided on the cooling wind inlet opening with a plurality of blades.

Another prior art cooling apparatus is known from EP 1 992 514 A1.

### [SUMMARY OF THE INVENTION]

### [Problem to Be Solved by the Invention]

The noise generated by driving the internal combustion engine includes the intake noise generated by rotating the cooling fan. When the emission and the output of the internal combustion engine become larger, especially, the intake noise of the fresh air introduced from the cooling wind inlet opening of the radiator cover becomes larger. The cooling wind inlet opening of the radiator cover, which is largely opened to the side direction of the crank case in the width direction of the vehicle, vertically and longitudinally diffuses and discharges the intake noise of the fresh air to side direction of the vehicle body.

A passenger seat of the straddle type vehicle is positioned above the cooling wind inlet opening of the radiator cover. Accordingly, the noise leaking out from the cooling wind inlet opening can easily reach to the passenger sitting on the passenger seat.

The present invention aims to provide a cooling apparatus of an internal combustion engine for straddle type vehicle which can improve the driving comfort by preventing the noise caused by driving the internal combustion engine from reaching to the rider in a built-in radiator type internal combustion engine.

### [Means for Solving the Problem]

In order to achieve the above-mentioned object, the invention provides a cooling apparatus as defined in claim 1.

The present invention according to Claim 2 is characterized in that in the cooling apparatus of the internal combustion engine for straddle type vehicle according to Claim 1, out of the cooling wind inlet openings of the radiator cover, the front cooling wind inlet opening formed on the front cover half portion in the further front direction than the crank axis has a larger opening area than the rear cooling wind inlet opening formed on the rear cover half portion in the further rear direction than the crank axis.

The invention according to Claim 3 is characterized in that in the cooling apparatus of the internal combustion engine for straddle type vehicle according to Claim 1 or 2, the lower cooling wind inlet opening formed on the cover lower half portion below the crank axis has a larger opening area than the upper cooling wind inlet opening formed on the cover upper half portion above the crank axis the cooling wind inlet openings of the radiator cover.

The invention according to Claim 4 is characterized in that in the cooling apparatus of the internal combustion engine for straddle type vehicle according to Claim 3, a footrest floor portion which forms a part of body cover is provided in front of the radiator cover, at least a part of the lower cooling wind inlet opening is positioned below the footrest floor portion.

The invention according to Claim 5 is characterized in that in the cooling apparatus of the internal combustion engine for straddle type vehicle according to any one of Claim 1 to 4, that acoustic materials are attached at least to the inside surface of said sound barriers in the width direction of the vehicle.

The invention according to Claim 6 is characterized in that in the cooling apparatus of the internal combustion engine for straddle type vehicle according to Claim 5, holding portions holding the acoustic material are formed on the inside surface of the sound barrier in the width direction of the vehicle so as to regulate the movement of the acoustic material in the crank shaft direction.

The invention according to Claim 7 is characterized in that in the cooling apparatus of the internal combustion engine for straddle type vehicle according to Claim 6, the holding portion engages and holds at least the lower end portion of the acoustic material.

The invention according to Claim 8 is characterized in that in the cooling apparatus of the internal combustion engine for straddle type vehicle according to any one of Claims 5 to 7, the radiator has an upper tank above the core, the upper portion of the acoustic material is sandwiched with the upper tank or an upper tank protective cover covering the upper tank and the radiator cover.

The invention according to Claim 9 is characterized in that in the cooling apparatus of the internal combustion engine for straddle type vehicle according to any one of Claims 5 to 8, the radiator has the lower tank below the core,

A second acoustic material is attached to the inside surface of the radiator cover, which is not oppose to the core surface of the radiator and the second acoustic material is sandwiched with a lower tank or a lower tank protective cover covering the lower tank and the radiator cover.

The invention according to Claim 10 is characterized in that in the cooling apparatus of the internal combustion engine for straddle type vehicle according to any one of Claims 1 to 3, a fastening boss portion provided in front of the cooling wind inlet opening of the radiator cover is formed on the bottom wall of a recessed portion further recessed than the outside surface of the radiator cover.

The invention according to Claim 11 is characterized in that in the cooling apparatus of the internal combustion engine for straddle type vehicle according to any one of Claims 1 to 10, a louver with a plurality of blades is provided on the cooling wind inlet openings.

The invention according to Claim 12 is characterized in that in the cooling apparatus of the internal combustion engine for straddle type vehicle according to Claim 11, the blades obliquely standing from the sound barrier to the outward in the width direction of the vehicle are integrally formed with the sound barrier.

### [Effect of the Invention]

According to the cooling apparatus of internal combustion engine for straddle type vehicle mentioned in Claim 1, the sound barrier is formed on a part of or all of the upper area than the crank axis out of the core surface opposite area of the radiator cover which is opposite to the core surface of the radiator in the radiator cover, in the side view of the built-in radiator type internal combustion engine. The area of the sound barrier is larger than the opening area of the cooling wind inlet opening, at least, at the upper area than the crank axis, in the core surface opposite area. Accordingly, the sound barrier blocks the noise especially leaking out from the internal combustion engine to the upper direction and prevents the noise from reaching to the rider, which can improve the driving comfort.

Moreover, the fresh air can be introduced from the cooling wind inlet openings which are formed on the area except the sound barrier of the radiator cover to the inside of the radiator cover due to the absorption of the rotating the cooling fan, which can maintain the cooling function of the radiator.

According to the cooling apparatus of the internal combustion engine for straddle type vehicle mentioned in Claim 2, out of the cooling wind inlet opening of the radiator cover, the front cooling wind inlet opening formed on the front cover half portion in the further front direction than the crank axis has a larger opening area than the rear cooling wind inlet opening formed on the rear cover half portion in the further rear direction than the crank axis. Accordingly, the front cooling wind inlet opening with a large opening area can easily introduce the traveling wind. Furthermore, the traveling wind introduced inside the radiator cover can easily diffuse from the front side portion to the rear side portion of the core along the core surface of the radiator, which improves the cooling function of the radiator.

According to the cooling apparatus of the internal combustion engine for straddle type vehicle mentioned in Claim 3, the lower cooling wind inlet opening formed on the cover lower half portion below the crank axis has a larger opening area than the upper cooling wind inlet opening formed on the cover upper half portion above the crank axis of the cooling wind inlet openings of the radiator covers. The enlargement of the sound barrier can reduce the noise, simultaneously, the lower cooling wind inlet opening with a larger opening area can easily introduce the traveling wind, which can improve the cooling function of the radiator.

According to the cooling apparatus of the internal combustion engine for straddle type vehicle mentioned in Claim 4, a footrest floor portion which forms a part of body cover is provided in front of the radiator cover, at least a part of the lower cooling wind inlet opening is positioned below the footrest floor portion. Accordingly, the lower cooling wind inlet opening can efficiently introduce the traveling wind flowing below the footrest floor portion to the rear direction. Even if the opening area of the cooling wind inlet opening becomes smaller by providing the sound barrier on the radiator cover, the radiator can maintain the sufficient cooling function.

According to the cooling apparatus of the internal combustion engine for straddle type vehicle mentioned in Claim 5, at least the acoustic material is attached to the inside surface of the sound barrier opposite to the core surface of the radiator.
Accordingly, the sound insulation effect can be improved furthermore.

According to the cooling apparatus of the internal combustion engine for straddle type vehicle mentioned in Claim 6, the holding portions holding the acoustic material are formed on the inside surface of the sound barrier in the width direction of the vehicle so as to regulate the movement of the acoustic material in the crank shaft direction of the acoustic material. Accordingly, the holding portion can regulate the acoustic material attached to the sound barrier so as not to be sucked to the inside in the crank shaft direction by the suction of the cooling fan, and prevents the acoustic material from touching on the core surface of the radiator, and keeps the space between the acoustic material and the core surface, which enables to diffuse the intake air all over the core surface. Accordingly, the radiator can maintain the sufficient cooling function. Moreover, the holding portion holds the acoustic material attached to the sound barrier. Accordingly, the acoustic material can be attached easily.

According to the cooling apparatus of the internal combustion engine for straddle type vehicle mentioned in Claim 7, the holding portion engages and holds at least the lower end portion of the acoustic material.

The lower end portion of the acoustic material is on the position where the acoustic material is easily peeled due to the intake air introduced from the cooling wind inlet opening formed by bordering the lower end of the sound barrier to which the acoustic material is attached and due to the air sucked to the inside in the crank shaft direction. However, due to the fact that at least the holding portions engage and hold the lower end portion of the acoustic material, the holding portions can regulate the movement of the lower end of the acoustic material to the inside in the crank shaft direction, stably hold the lower end portion of the acoustic material. Accordingly, the holding portion prevents the acoustic material from touching on the core surface of the radiator. The space between the acoustic material and the core surface is surely kept, which enables to diffuse the intake air all over the core surface. Accordingly, the radiator can maintain the sufficient cooling function.

According to the cooling apparatus of the internal combustion engine for straddle type vehicle mentioned in Claim 8, the radiator has an upper tank above the core, the upper portion of the acoustic material is sandwiched with the upper tank or the upper tank protective cover covering the upper tank and the radiator cover. Accordingly, the number of components can be reduced without the special fixing member for fixing the upper portion of the acoustic material. Simultaneously, the misregistration of the upper portion of the acoustic material in the crank shaft direction is regulated. The acoustic material is suppressed to touch on the core surface of the radiator. The sufficient cooling function can be secured by keeping the space between the acoustic material and the core surface.

Moreover, the sandwiched upper portion of the acoustic material can suppress the vibration of the radiator cover, and can prevent the noise caused by the vibration.

According to the cooling apparatus of the internal combustion engine for straddle type vehicle mentioned in Claim 9, the radiator has the lower tank below the core, the second acoustic material is attached to the inside surface which is not oppose to the core surface of the radiator of the radiator cover, The opening area of the cooling wind inlet opening can be largely secured, and the cooling function of the radiator can be maintained. Accordingly, the large opening area of the cooling wind inlet opening can be secured, and the cooling function of the radiator can be easily secured.

Moreover, the second acoustic material is sandwiched with the lower tank or the lower protective cover covering the lower tank and the radiator cover. Accordingly, the vibration of the radiator cover can be suppressed and the noise caused by the vibration can be prevented.

According to the cooling apparatus of the internal combustion engine for straddle type vehicle mentioned in Claim 10, the fastening boss portion of the radiator cover provided in front of the cooling wind inlet opening is formed on the bottom wall of the recessed portion further recessed than the outside surface of the radiator cover. Accordingly, the fastening member for mounting the radiator cover on the internal combustion engine side is provided so as to fasten the fastening boss portion formed on the bottom wall of the recessed portion further recessed than the outside surface of the radiator cover. Therefore, the fastening member is provided on the recessed portion and is not projected from the outside surface of the radiator cover to the outward. The intake resistance of the traveling wind introduced to the cooling wind inlet opening can be decreased. Even if the opening area of the cooling wind inlet opening is formed small, the efficient intake of the cooling wind enables to maintain the cooling function of the radiator.

According to the cooling apparatus of the internal combustion engine for straddle type vehicle mentioned in Claim 11, the louver with the plurality of blades is provided on the cooling wind inlet openings. Accordingly, the cooling wind can be guided and introduced efficiently by the louver on the cooling wind inlet openings, which enables to maintain the high cooling function.

According to the cooling apparatus of the internal combustion engine for straddle type vehicle according to Claim 12, the blades obliquely standing from the sound barrier to the outward in the width direction of the vehicle is integrally formed with the sound barrier. Accordingly, the rigidity of the sound barrier portion can be increased. Simultaneously, the blades make the sound barrier inconspicuous, which can improve the outer appearance.

### [Brief Description of the drawings]

FIG.1 is a general side view of the motorcycle in which the cooling apparatus mentioned in the present invention 1 is applied.
FIG.2 is an enlarged side view of the main parts of the power unit of the motorcycle in the periphery of the internal combustion engine.
FIG.3 is a side view in the state that the radiator cover of the internal combustion engine is omitted.
FIG.4 is an arrow sectional view taken along an IV-IV line in FIG.2.
FIG.5 is an arrow sectional view taken along a V-V line in FIG.2.
FIG.6 is an arrow sectional view taken along a VI-VI line in FIG.2.
FIG.7 is a back surface view of the radiator cover.
FIG. 8 is a back surface view in the state that the radiator cover, the radiator, and the shroud are attached.
FIG.9 is an enlarged side view of the main parts of the power unit of the motorcycle in the periphery of the internal combustion engine, in which the cooling apparatus related to the embodiment 2 of the present invention is applied.
FIG.10 is an arrow sectional view taken along an X-X line in FIG.9.

### [Best Mode for Carrying Out the Invention]

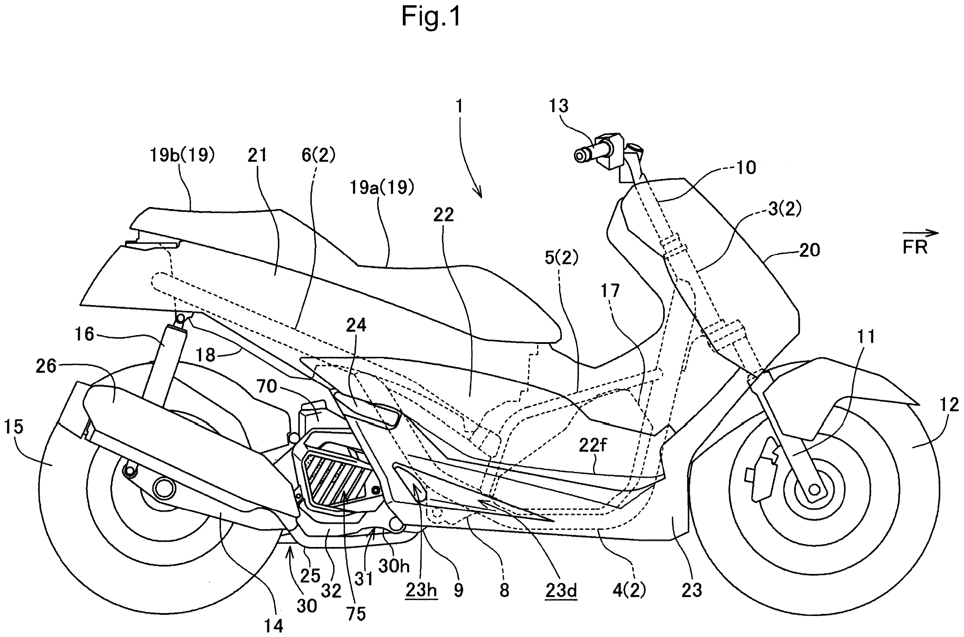

Hereinafter, the present invention related to the embodiment 1 will be explained according to FIG.1 to 8.

FIG.1 is a general side view of the straddle type motorcycle 1 in which the cooling apparatus mentioned in the present embodiment 1 is applied.

Moreover, as for the explanation in the present specification and the scope of claims, the directions such as "front", "rear", "right", and "left" should follow the ordinal standard in which the advancing direction is set as the front direction in the straddle type motorcycle 1 related to the present embodiment 1.

The arrows in the drawings show the respective directions as follows. An arrow "FR" shows the front direction of the vehicle. An arrow "LH" shows the left direction of the vehicle. An arrow "RH" shows the right direction of the vehicle. An arrow "UP" shows the upper direction of the vehicle.

With reference to FIG.1, a body frame 2 forming a framework of the vehicle body of the straddle type motorcycle 1 is configured such that a pair of main frames 4, 4 are bifurcated and extended downward to the right and left from a head pipe 3 in the front portion of the vehicle body, the main frames 4, 4 are bent to the rear direction at the lower end, and are extended horizontally, then are bent obliquely upward.

Center frames 5, 5 extended rearward from the respective front vertical portions of the main frames 4, 4 are bent downward at the rear portion and are connected to the rear portion of the central horizontal portion of the main frames 4, 4.

Seat rails 6, 6 are slightly and obliquely inclined upward and extended from the lower portion of the downward bending portion of the center frames 5, 5 to the rear direction. The middle of the seat rails 6, 6 are supported on the rear edges of the main frames 4, 4 which are bent and obliquely extended upward and connected.

Generally, as for the front portion of the body frame 2 configured as above-mentioned, a steering stem 10 is rotatably penetrated into a head pipe 3, the lower end of the steering stem 10 is integrally connected on a front fork 11 which axially supports a front wheel 12, and right and left handle bars 13, 13 are bifurcated to the right and left and are extended upward from the upper end of the steering stem 10.

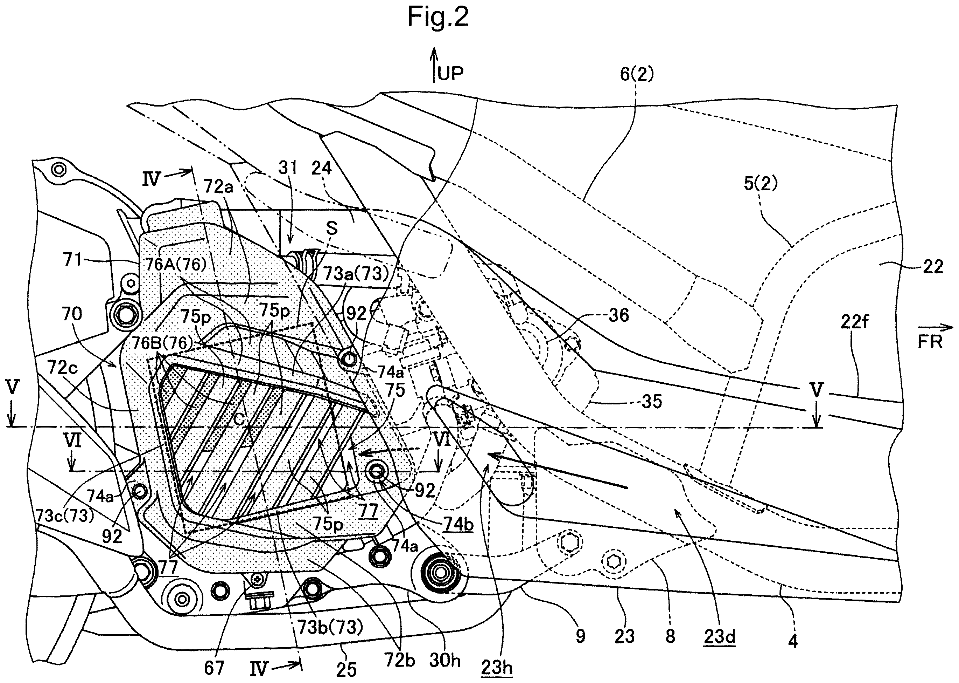

With reference to FIGs.1 and 2, supporting brackets 8, 8 are projected on the rear bending portion of the central horizontal portion of the main frames 4, 4. Meanwhile, hanger portions 30h, 30h are projected on the front lower portion of the swing type power unit 30. A link member 9 connects the supporting brackets 8, 8 and the hanger portions 30h, 30h. The power unit 30 is swingably supported on the body frame 2.

The power unit 30 has a water cooled four stroke single cylinder internal combustion engine 31 as the front portion thereof. The power unit is configured such that a cylinder block 33, a cylinder head 34, and a cylinder head cover 35 are overlapped with in order and projected from a crank case 32 of the internal combustion engine 31 to the front direction, and the cylinder axis is largely and forwardly inclined to the approximately horizontal.

An exhaust pipe 25 is extended downward from the cylinder head 34, and bent and extended rearward below the crank case 32. The exhaust pipe is bent to the obliquely upward to the right direction before reaching to a rear wheel 15 and is connected to a muffler 26 disposed in the side direction of the rear wheel 15.

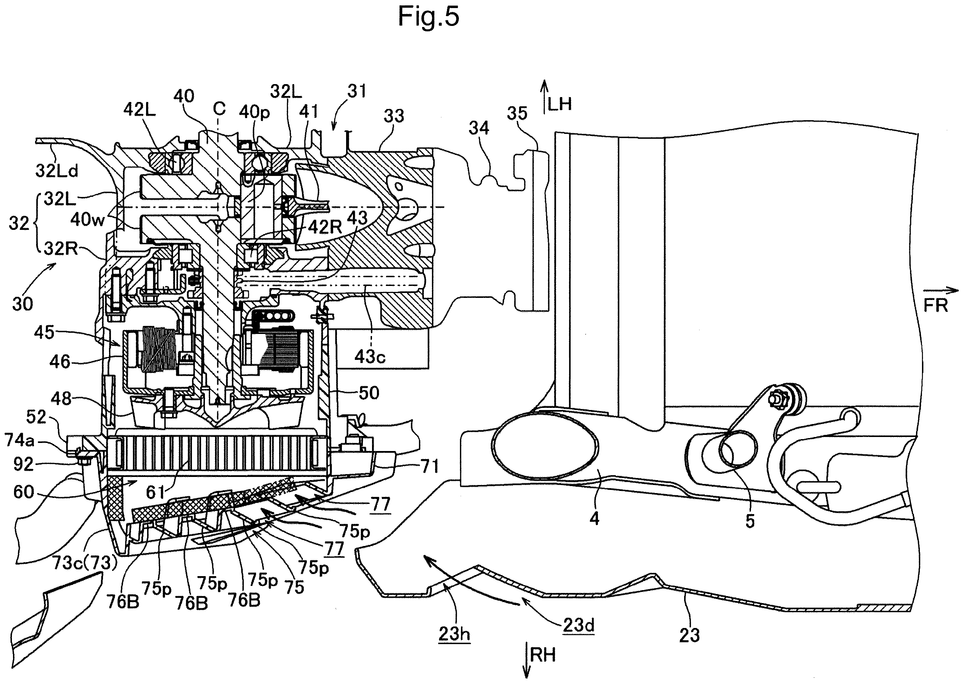

The crank case 32 is configured such that a right crank case 32R and a left crank case 32L which are divided into the right and left are combined. The left crank case 32L is extended backward so as to form a transmission case 32Ld (see FIG.5) for containing a belt type stepless transmission (not shown). The swing arm 14 is extended from the right crank case 32R to the rear direction. The rear wheel 15 is axially supported on the rear portion of the transmission case 32Ld and the swing arm 14 (see FIG.1).

Rear cushions 16, 16 are interposed between the rear ends of the transmission case 32Ld and the rear ends of the swing arm 14 and the rear ends of the seat rails 6, 6.

A fuel tank 17 is mounted so as to be disposed on the main frames 4, 4 in the space surrounded by the center frames 5, 5.

Moreover, a long storage box 18 is longitudinally supported on the seat rail 6. A passenger seat 19 covers the storage box 18 so as to be openable and closable from above.

The passenger seat 19 is a tandem seat for two people such that a rider seat 19a and a pillion passenger seat 19b are longitudinally disposed.

The body cover covering the vehicle body is generally configured as below, as shown in FIG.1.

A front cover 20 covers the head pipe 3 and the steering stem 10 on the front portion of the vehicle body, a body cover 21 covers the periphery of the storage box 18 from the center of the vehicle body to the rear portion of the vehicle body. A floor side cover 22 covering the vehicle body center from the right and left side directions is provided so as to be connected below the body cover 21. A floor skirt 23 is continuously connected in a shape so as to be longitudinally and obliquely stand up below the floor side cover 22 and covers the lower portion of the vehicle body.

The floor side cover 22 arranged below the both right and left sides of the rider seat 19a which is a front half portion of the passenger seat 19 is extended frontward to the vicinity of the front wheel 12. A step floor 22f which is a step portion such that the lower portion thereof is longitudinally projected to the right and left outside directions is formed so as to be longitudinally long.

A floor skirt 23 is adjacent to the outside edge of the step floor 22f projected to the outside directions of the floor cover 22, and is arranged so as to be suspended downward.

A wind guiding recessed portion 23d recessed and formed in a frontward tapered triangle shape and forming a conical surface on the inside thereof in the side view as shown in FIG.1 is formed on the rear half portion of the floor skirt 23 below the step floor 22f so as to be longitudinally long. An air guiding opening 23h is drilled to pierce on the wall surface faced to the front direction at the rear end where the vertical width of the wind guiding recessed portion 23d is widest.

The internal combustion engine 31 of the power unit 30 is disposed below the storage box 18, namely, below the passenger seat 19. The crank case 32 of the internal combustion engine 31 is positioned below the vicinity of the longitudinal center of the passenger seat 19 (see FIG.1).

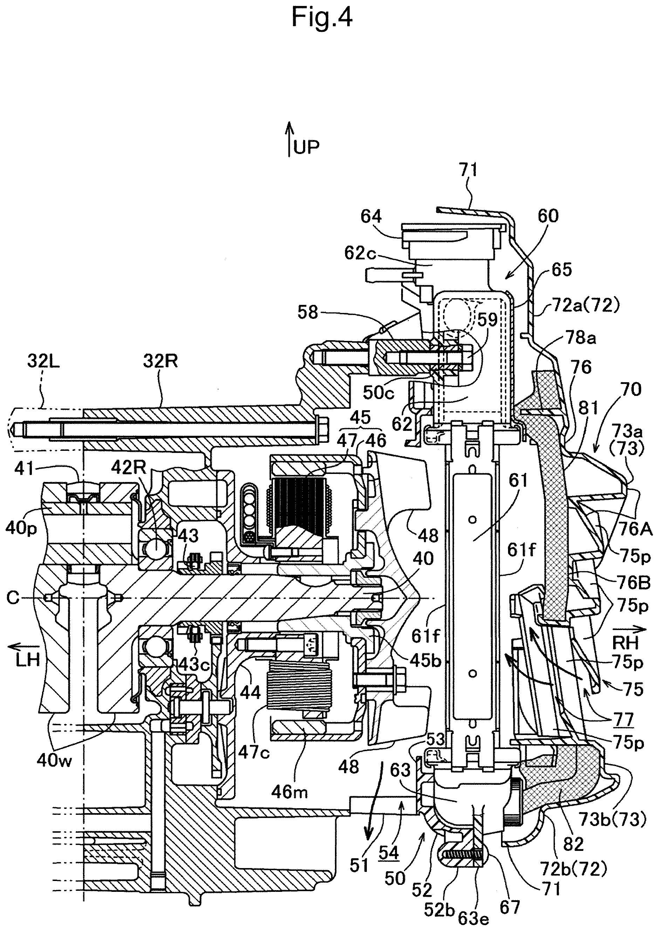

With reference to FIGs.4 and 5, a crank shaft 40 directing the width direction of the vehicle is rotatably supported on the crank case 32 through bearings 42L, 42R. A large end of a connecting rod 41 connecting the space between a piston (not shown) and thereof is axially supported on a crank pin 40p bridged between right and left of crank webs 40w, 40w of the crank shaft 40.

A drive sprocket 43 on which a cam chain 43c is wound for transmitting the power to the valve system so as to be adjacent to the bearing 42R is fitted into the right crank shaft portion penetrating the right bearing 42R of the crank shaft 40 and is extended to the right direction. Furthermore, an AC generator 45 is provided on a holding member 44 provided so as to plug up the portion penetrating the side wall opening of the right crank case 32R of the right crank shaft portion and so as to plug up the side wall opening.

The AC generator 45 is an apparatus for starting and power generating, a bowl shaped outer rotor 46 is firmly fixed on the right crank shaft end portion of the crank shaft 40 through an ACG boss portion 45b. An inner stator 47 on which a stator coil 47c is wound around is fixed and held on the center cylindrical portion of the holding member 44 inside a magnet 46m arranged on the inner periphery surface of the outer rotor in the circumferential direction.

A cooling fan 48 is attached to the right side surface of the bowl shaped outer rotor 46 of the AC generator 45 and is coaxially provided with a crank axis C.

Namely, a cooling fan 48 is provided on the end portion of the crank shaft 40.

The right crank case 32R surrounds the outer periphery of the outer rotor 46 of the AC generator 45. A shroud 50 connected to the right crank case 32R surrounds the outer periphery of the cooling fan 48 attached on the right side of the outer rotor 46.

A radiator 60 is arranged on the right side of the cooling fun 48 in the crank shaft direction such that a core surface 61f of a core 61 is opposite to the cooling fan 48.

As above-mentioned, the present internal combustion engine adopts the built-in radiator type.

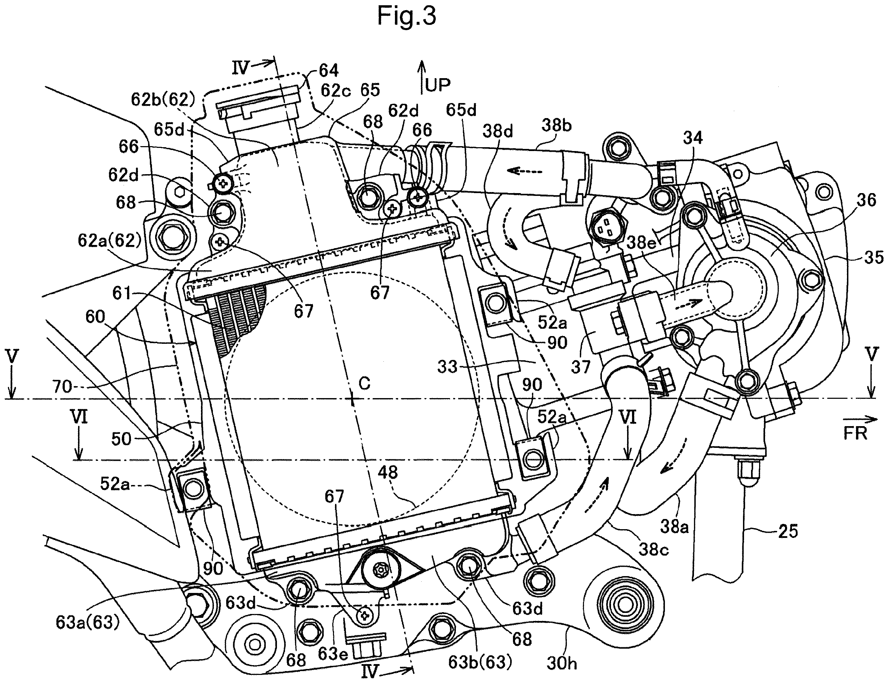

The radiator 60 is configured with an resin upper tank 62 and a resin lower tank 63 which are vertically provided by sandwiching the core 61 with a rectangular core surface, and is attached in inclined posture such that the rear portion thereof is positioned lower than the front portion thereof (see FIG.3).

A radiator cover 70 covers the right side of the radiator 60.

As shown in FIG.3, a water pump 36 interlocking the rotation of the crank shaft 31 is arranged on the right side surface of the cylinder head 34 and the cylinder head cover 35 in the internal combustion engine 31. The cooling water discharged from the water pump 36 is introduced to the water jacket (not shown) of the cylinder block 33 through a hose 38a.

Moreover, the cooling water discharged from the water jacket formed on the cylinder head 34 so as to be connected to the water jacket (not shown) of the cylinder block 33, is introduced to the upper tank 62 of the radiator 60 through the hose 38b. The cooling water cooled by flowing from the upper tank 62 to the core 61 is discharged from the lower tank 63 through the hose 38c.

Meanwhile, a thermostat 37 is arranged in the right direction of the cylinder block 33, a hose 38c introducing the cooling water from the lower tank 63 is connected to the thermostat 37.

Moreover, the cooling water discharged from the water jacket of the cylinder head 34 can be introduced to the thermostat 37 through a hose 38d for bypass, the thermostat 37 is connected to a suction pipe 38e of the water pump 36.

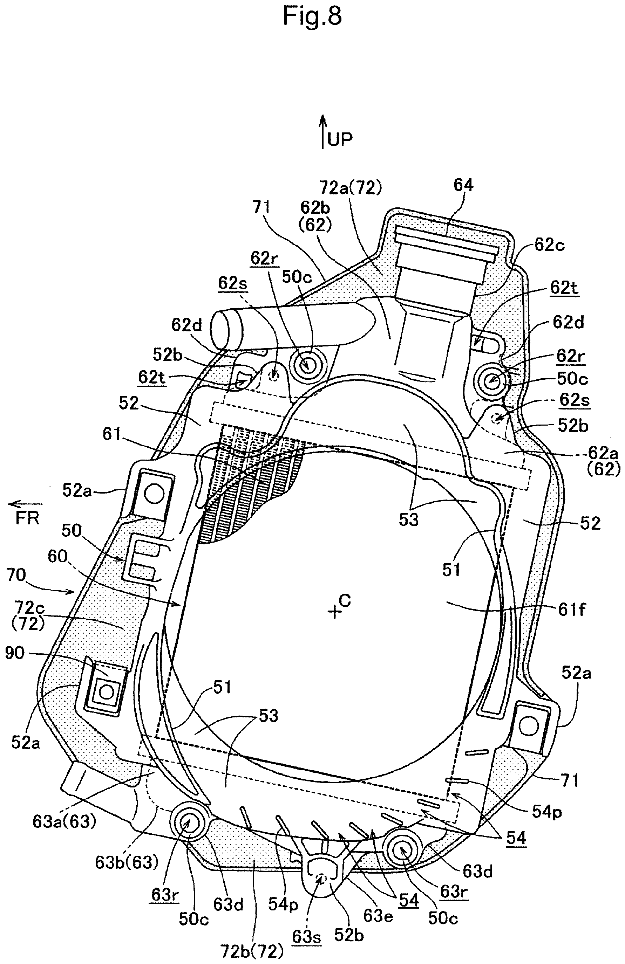

With reference to FIGs.3 and 8, the upper tank 62 of the radiator 60 is formed such that a width of a tank lower portion 62a is stretched to the full range of the upper end edge of the core 61 and the width is narrowed from the both sides and a tank bulging portion 62b is bulged to the upper direction. A filler neck 62c to which the filler cap 64 is attached is projected upward from the tank bulging portion 62b.

Mounting brackets 62d, 62d are formed so as to protrude at the both angular portions formed by the tank lower portion 62a and the tank bulging portion 62b.

As shown in FIG.8, a crank case mounting hole 62r, and a shroud mounting hole 62s, and a protective cover mounting hole 62t for mounting an upper tank protective cover 65 are formed on mounting bracket 62d respectively.

Meanwhile, the lower tank 63 of the radiator 60 is formed such that a width of a tank upper portion 63a is stretched to the full range of the lower end edge of the core 61 and the width is narrowed from the one side in the rear side and a tank bulging portion 63b is bulged in the lower direction.

Mounting bracket 63d, 63d are formed so as to protrude at the angular portion formed by the tank upper portion 63a and the tank bulging portion 63b. A crank case mounting hole 63r is formed on each mounting bracket 63d (see FIG.8).

Furthermore, a mounting bracket 63e is protruded downward on a slightly rear side from the center of the tank bulging portion 63b, and the shroud mounting hole 63s is formed on the mounting bracket 63e (see FIG.8).

With reference to FIG.1, a pillion step 24 is provided on the rear portion of the floor side cover 22 in the vicinity of the upper tank 62 of the radiator 60 such that the pillion passenger sitting on the pillion passenger seat 19b put the feet.

Accordingly, the feet of the pillion passenger may touch on the upper tank 62. The metal upper tank protective cover 65 covers the upper tank 62 so as to protect and reinforce the resin upper tank 62.

Moreover, a metal lower tank protective cover is not adopted in the present embodiment 1 and the embodiment 2 described later. However, as mentioned above, the metal lower tank protective cover may cover the lower tank 62 for protecting the lower tank 63 which is also made of resin.

The upper tank protective cover 65 is put over the tank lower portion 62a and the tank bulging portion 62b of the upper tank 62 from the outside (the outside in the crank shaft direction) and the projecting mounting pieces 65d, 65d of the upper tank protective cover 65 are screwed into the protective cover mounting holes 62t, 62t of the upper tank 62 to be attached to the upper tank 62 with screws 66, 66 (see FIG.3)

The resin shroud 50 covering the outer periphery of the cooling fan 48 is attached to the back side of the radiator 60 (the inside in the crank shaft direction).

With reference to FIG.8 (also see FIG.4), the shroud 50 is generally configured with a cylindrical portion 51 surrounding the outer periphery of the cooling fan 48, an outer periphery flange portion 52 which is developed in a rectangular shape on the outer periphery of the cylindrical portion 51, and an inner periphery flange portion 53 extended to the inner periphery of the inner cylindrical portion 51 and on which a circular opening with an approximately same inner diameter as the outer diameter of the cooling fan 48 is largely formed on the center.

A discharge port 54 is opened from the lower portion to the rear portion of the cylindrical portion 51 of the shroud 50. A plurality of wind guiding plates 54p guiding to discharge the cooling wind is formed on the discharge port 54.

Mounting brackets 52a, 52a are vertically projected on the front end edge of the outer periphery flange portion 52 developed in a rectangular shape. The mounting bracket 52a is formed so as to be projected on a slightly lower direction from the center of the rear end edge of the outer periphery flange portion 52.

Moreover, mounting boss portions 52b, 52b are longitudinally formed so as to be projected upward on the upper end edge of the outer periphery flange portion 52. The Mounting boss portion 52b is formed so as to be projected downward on the center portion of the lower end edge of the outer periphery flange portion 52.

The shroud 50 is configured as below. The outer periphery flange portion 52 covers the tank lower portion 62a of the upper tank 62 of the radiator 60 and the tank upper portion 63a of the tank 63 from the back side (the inside in the crank shaft direction). The two upper mounting boss portions 52b, 52b and the one lower mounting boss portion 52b are disposed opposite to the shroud mounting holes 62s, 62s, 63s in the radiator side so as to be fastened by screwing from the front side of the radiator 60 with screws 67, 67, 67 and fastened to the radiator 60 (see FIGs.3, 8). The large circular opening on the center of the inner periphery flange portion 53 of the shroud 50 is corresponding to almost of the core surface 61f of the core 61 of the radiator 60, except the four corners thereof (see FIG.8).

The radiator 60 is attached to the right crank case 32R of the internal combustion engine 31 in a state that the shroud 50 has mounted on the back side in advance, so as to cover the cooling fan 48 provided on the right end of the crank shaft 40 from the right side.

With reference to FIG.8, cylindrical collar members 50c are fitted into the crank case mounting holes 62r, 62r formed on the mounting brackets 62d, 62d of the upper tank 62 of the radiator 60 and the crank case mounting holes 63r, 63r formed on the mounting brackets 63d, 63d of the lower tank 63, respectively. As shown in FIG.4, a middle shaft bolt 58 with a screw hole inside thereof is screwed and vertically arranged on each area of the right opening end surface of the right crank case 32R which is opposite to each collar member 50c.

Circular holes of the respective collar members 50c are coaxially continued on the screw hole of the middle shaft bolt 58. A bolt 59 is inserted into the collar member 50c, is screwed and fastened to the screw hole of the middle shaft bolt 58. Accordingly, the radiator 60 mounting the shroud 50 on the back side in advance is directly attached to the right crank case 32R.

As shown in FIGs.4 and 5, the cylindrical portion 51 of the shroud 50 surrounds the outer periphery of the cooling fan 48. The core 61 of the radiator 60 is disposed opposite to the right side of the cooling fan 48 so as to face to the circular opening of the inner periphery flange portion 53 of the shroud 50.

As mentioned above, the resin radiator cover 70 covers the right side of the radiator 60 mounted on the right crank case 32R.

As shown in FIGs.2, 7, and 8, the radiator cover 70 is shown in a dotted pattern.

With reference to FIGs.2, 4, and 8, the radiator cover 70 is generally configured with a cover outer periphery wall 71 approximately along the outline of the radiator 60 in the side view and a cover side wall 72 which is opposite to the right surface of the radiator 60. A cover side wall 72 has an upper portion side wall 72a which is opposite to the upper tank 62, a lower portion side wall 72b which is opposite to the lower tank 63, and a the middle side wall 72c which is opposite to the core 61.

The cover outer periphery wall 71 covers almost of the outer periphery of the right half portion of the radiator 60 in the crank shaft direction. With reference to FIG.2, fastening boss portions 74a, 74a are vertically formed on the front portion of the middle side wall 72c of the radiator cover 70. A fastening boss portion 74a is formed on the rear portion of the middle side wall 72c so as to bulge. The fastening boss portions 74a, 74a, 74a, are corresponding to mounting brackets 52a, 52a, 52a of the shroud 50, respectively.

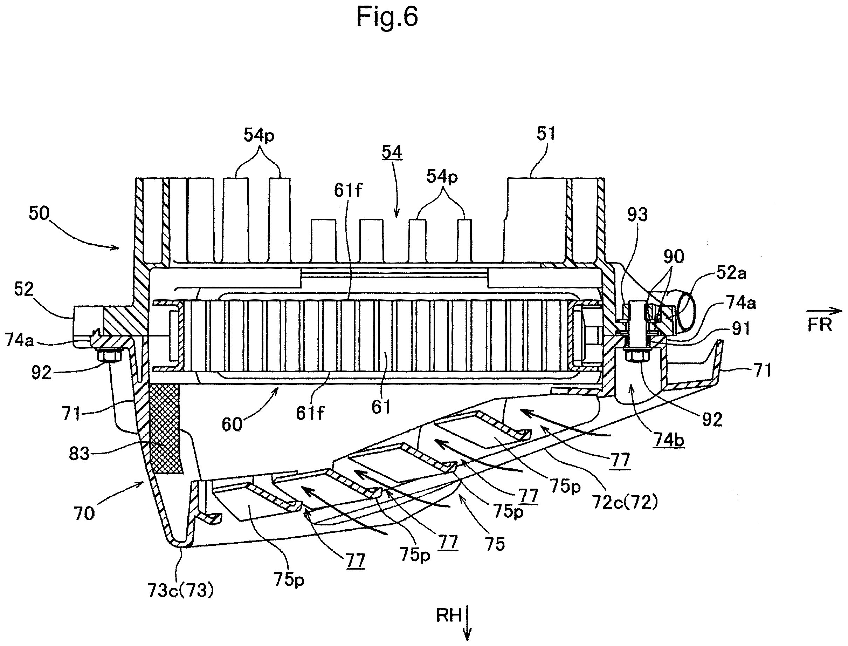

Moreover, the fastening boss portion 74a on the front portion of the middle side wall 72c in the lower direction is formed on the bottom wall of a recessed portion 74b further recessed than the outside surface of the middle side wall 72c (see FIG.6).

Both of the radiator cover 70 and the shroud 50 are made of resin. In order to fasten the both with bolts, a metal clip 90 made of a metal plate formed in a U shape is inserted into the mounting bracket 52a of the shroud 50 (see FIGs.3, 8). As shown in FIG.6, a cylindrical collar 91 is inserted into the bolt hole of the fastening boss portion 74a of the radiator cover 70. The bolt 92 penetrates the collar 91 and the metal clip 90 from the outside. The screw portion projected to the inside is screwed with a nut 93 and fastened. Accordingly, the radiator cover 70 is attached and fastened to the shroud 50.

As for the cover side wall 72, the middle side wall 72c and the lower portion side wall 72b are bulged to the right direction, compared with the upper portion side wall 72a (see FIG.4). As shown in FIGs.5, 6, especially, the middle side wall 72c is gradually bulged and inclined to the right direction as it approaches from the front portion to the rear direction.

With reference to FIG.2, the inclined portion of the middle side wall 72c of the radiator cover 70 is formed inside the frame wall 73 which has an upper wall 73a, a lower wall 73b, and a rear wall 73c which form in a deformed U shape opened to the front direction. A cooling wind inlet opening 77 is formed on the inclined surface inside the frame wall 73.

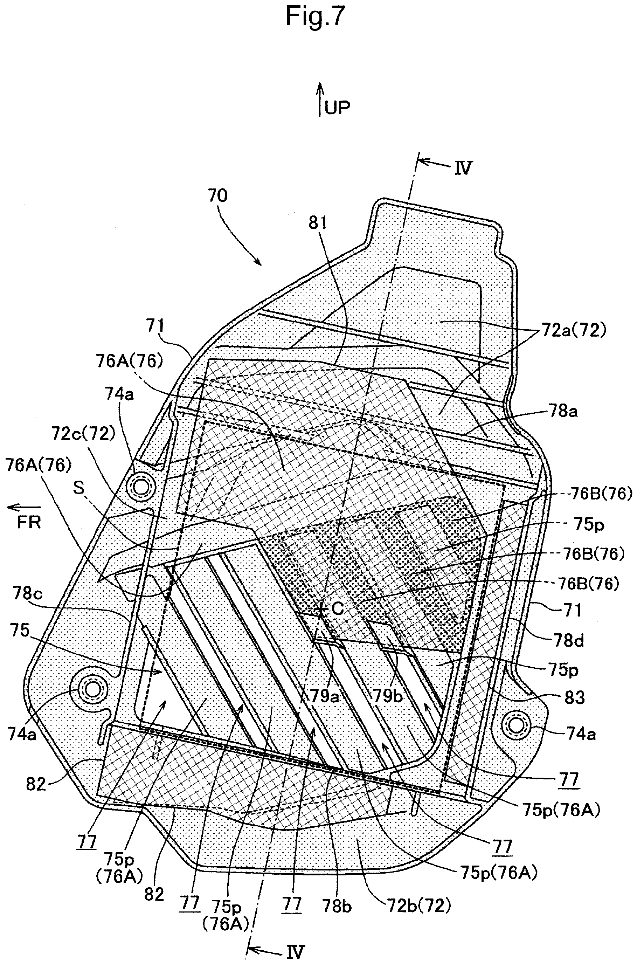

In the side view shown in FIGs.2, and 7, the core surface opposite area S of the radiator cover 70, which is opposite to the core surface 61f of the core 61 of the radiator 60, is shown as a rectangular shape frame in a thick broken line, and the position of the crank axis C of the crank shaft 40 is shown in a cross.

With reference to FIG.2, the frame wall 73 of the middle side wall 72c is approximately overlapped with the core surface opposite area S. The upper wall 73a becomes closer to the lower wall 73b and narrower than the core surface opposite area S, as it approaches to the front direction. The front opening area of the narrowed frame wall 73 is slightly protruded from the core surface opposite area S to the front direction.

A louver 75 with t plurality of blades 75p arranged in parallel is formed inside the frame wall 73 of the middle side wall 72c of the radiator cover 70.

The plurality of blades 75p is obliquely extended rearward from the upper wall 73a to the lower wall 73b and the rear wall 73c. The front end edge of the respective blades 75p are formed in parallel in an inclined posture so as to be opened to the outside (the right direction) (see FIG.5, 6).

A sound barrier 76 is defined as the area of the core surface opposite area S of the radiator cover 70 except the area on which the cooling wind inlet opening 77 is formed, namely, as the area where is not opened.

The sound barrier 76 comprises a first sound barrier 76A configured with the middle side wall 72c including the frame wall 73 and the blades 75p inside the core surface opposite area S, and a second sound barrier 76B formed between the plurality of blades 75p inside the frame wall 73, as described below.

The second sound barrier 76B is formed on the portion except the front portion of the approximately upper half portion inside the frame wall 73 of the middle side wall 72c. The cooling wind inlet opening 77 is formed between the plurality of blades 75p, that is, on the portion except the second sound barrier 76B inside the frame wall 73.

In the side view shown in FIG.2 and 7, the sound barrier 76 (76A, 76B) covers almost of the portion of the core surface opposite area S of the radiator cover 70 except the front portion of the upper area than the crank axis C. The second sound barrier 76B slightly extends below the crank axis C.

Therefore, the cooling wind inlet opening 77 is formed on the lower area and the further front portion than the second sound barrier 76B inside the frame wall 73.

The cooling wind inlet opening 77 is formed so as to be opened between the blades 75p, 75p adjacent to the louver 75.

However, the blades 75p which is a part of the second sound barrier 76B obliquely stands from the sound barrier 76 to the outward in the width direction of the vehicle. The adjacent blades 75p, 75p are integrally and continuously formed with the second sound barrier 76B in a wave shape (see FIG.4, 5).

As mentioned above, the blades 75p which are a part of the second sound barrier 76B are integrally formed with the sound barrier 76. Accordingly, the rigidity of the sound barrier portion can be increased. Simultaneously, the blades 75p make the second sound barrier 76B inconspicuous, which can improve the external appearance.

With reference to FIG.2, 5, the radiator cover 70 is positioned behind the floor skirt 23 covering the lower portion of the center of the vehicle body from the side direction. The cooling wind inlet opening 77 on which the louver 75 is formed inside the frame wall 73 having the cooling wind inlet opening 77 of radiator cover 70 is positioned in the rear direction of the wind guiding recessed portion 23d and the air guiding opening 23h formed on the floor skirt 23 below the step floor 22f of the floor side cover 22.

Therefore, while the motorcycle 1 is traveling, as shown in a thick arrow in FIG.2, the traveling wind flows along the floor skirt 23 which forms the lower portion of the vehicle body. The traveling wind is guided by the wind guiding recessed portion 23d and is flown from the air guiding opening 23h to the rear direction, and is efficiently introduced to the cooling wind inlet opening 77 of the louver 75 of the radiator cover 70.

As shown in FIG.5, the plurality of blades 75p are arranged in parallel to the louver 75 of the radiator cover 70 and positioned in the rear direction of the air guiding opening 23h of the floor skirt 23. The blades are formed so as to be gradually shifted to the right direction as it approaches from the front portion to the rear direction. Accordingly, the opening area facing to the front direction of the cooling wind inlet opening 77 is extended to the width direction of the vehicle.

Since the traveling wind flows from the air guiding opening 23h to the rear direction, the plurality of blades 75p extended to the width direction of the vehicle of the louver 75 of the radiator cover 70 can catch the traveling wind and can guide and can efficiently and sufficiently introduce the cooling wind from the cooling wind inlet opening 77 inside the radiator cover 70, which can maintain the high cooling function of the radiator 60.

Especially, as shown in FIG.2, as for the cooling wind inlet opening 77 formed on the lower area and the further front portion than the second sound barrier 76B inside the frame wall 73 of the radiator cover 70, the lower cooling wind inlet opening formed on the cover lower half portion below the crank axis C has a larger opening area (opening region) than the upper cooling wind inlet openings formed on the cover upper half portion above the crank axis C. The lower cooling wind inlet opening having the larger opening area is positioned at the same level as the air guiding opening 23h of the floor skirt 23 below the step floor 22f, is positioned at approximately same in the width direction of the vehicle, and is positioned approximately behind the air guiding opening 23h. Accordingly, the traveling wind can be introduced easily, abundantly, and efficiently, and the cooling function of the radiator 60 can be further improved.

The cooling apparatus of the built-in radiator type internal combustion engine 31 introduces the fresh air from the cooling wind inlet opening 77 of the radiator cover 70 inside the radiator cover 70 due to the suction by the rotating cooling fan 48. In addition to that, as mentioned above, the cooling wind inlet opening 77 can positively introduce the traveling wind. Even though the cooling wind inlet opening 77 with the limited opening area by the sound barriers 76 (76A, 76B) can fully introduce the fresh air inside the radiator cover 70. Accordingly, the high cooling function of the radiator 60 can be maintained.

Moreover, the fresh air is sucked by the cooling fan 48 rotating inside the core 61 of the radiator 60 and makes the core 61 cooled. The fresh air is guided by the wind guiding plate 54p and is discharged from the discharge port 54 formed on the lower portion of the shroud 50 to the outside (see FIG.4).

The cooling wind inlet opening 77 of the radiator cover 70 is formed on the lower area and the further front portion than the sound barrier 76 inside the frame wall 73. As shown in FIG.2, the front cooling wind inlet opening formed on the cover front half portion in front of the crank axis C has a larger opening area (opening region) than the rear cooling wind inlet openings formed on the cover rear half portion behind the crank axis C. Accordingly, a front cooling wind inlet opening with a large opening area can easily introduce the traveling wind. Furthermore, the traveling wind introduced inside the radiator cover 70 can easily diffuse from the front side portion to the rear side portion of the core 61 along the core surface 61f of the radiator 60, which further improves the cooling function of the radiator 60.

In the built-in radiator type internal combustion engine 31, the sound barrier 76 (76A, 76B) of the radiator cover 70 is formed on the portion inside the frame wall 73 except the front portion of the approximately upper half portion.
In the side view shown in FIG.2 and 7, the sound barrier 76 (76A, 76B) covers a part of (most of: in the embodiment 1) the portion of at least the core surface opposite area S except the front portion of the upper area than the crank axis C.

More specifically, the area of the sound barriers 76 (76A, 76B) is larger than the opening area of the cooling wind inlet opening 77 at the upper area than the crank axis C at least in the core surface opposite area S. Accordingly, the sound barrier 76 (76A, 76B) blocks the noise leaking out to the upper direction of the internal combustion engine and prevents the noise from reaching to the rider sitting on the passenger seat positioned above the crank case 32 of the internal combustion engine 31, which can improve the driving comfort.

Especially, as for the internal combustion engine in which the rotation of the cooling fan cause a loud intake noise and the emission is high and the output is large, the noise can be efficiently prevented.

Thus, even if the opening area of the cooling wind inlet opening 77 becomes smaller by providing the sound barrier 76 (76A, 76B) on the radiator cover 70, as mentioned above, the lower cooling wind inlet opening formed on the cover lower half portion below the crank axis C of the cooling wind inlet openings 77 except the sound barrier 76 (76A, 76B) has a larger opening area. Accordingly, the traveling wind can be introduced easily, abundantly, and efficiently, and the cooling function of the radiator 60 can be further improved.

As shown in FIG.7, an upper rib 78a, a lower rib 78b, a front rib 78c, and a rear rib 78d are formed and projected from the cover side wall 72 on each side including "upper", "lower", "front", and "rear" and in parallel respectively, on the inside surface of the cover side wall 72 of the radiator cover 70 in the width direction of the vehicle, so as to surround the rectangular core surface opposite area S opposite to the core surface 61f of the core 61 of the radiator 60.

Engage supporting pieces 79a, 79b are formed and projected so as to be bent in an L-shape at the front and rear two points along the lower end edge of the second sound barrier 76B and so as to be opened upward on the inner surface of the second sound barrier 76B formed on the portion of the middle side wall 72c of the cover side wall 72 except the front portion of the approximately upper half portion inside the frame wall 73.

A first acoustic material 81 in a shell plate shape is attached to the inside surface of the cover side wall 72 of the radiator cover 70 due to the fact that the first acoustic material 81 is engaged with engage supporting pieces 79a, 79b at the lower end edges thereof and is regulated to move in the crank shaft direction (in the width direction of the vehicle).

The engage supporting pieces 79a, 79b are holding portions engaging and holding the first acoustic material 81.

As shown in FIG.7, the first acoustic material 81 held by the engage supporting pieces 79a, 79b at the lower end edge is extended further upward from the second sound barrier 76B, in addition to the inside surface of the second sound barrier 76B, is projected further upward from the frame wall 73 (the first sound barrier 76A) inside the core surface opposite area S, and is reached further upward than the upper rib 78a to the inside surface of the upper portion side wall 72a. The first acoustic material 81 is formed in sponge, and the adhesive is coated all over the back surface.

The first acoustic material 81 is transformed along the inside surface of the cover side wall 72, and is glued to the inside surface of the cover side wall 72 with the adhesive.

Thus, the first acoustic material 81 is attached to the back surface of the sound barriers 76 (76A, 76B) covering almost of the portion except the front portion of the upper area than the crank axis C of the core surface opposite area S of the radiator cover 70, which is opposite to the core surface 61f of the radiator 60. Accordingly, the sound insulation effect can be further improved.

As shown in FIG.4, the upper portion of the first acoustic material 81 is opposite to the upper tank 62 of the radiator 60. The upper rib 78a projected on the inside surface of the upper portion side wall 72a of the radiator cover 70 is encroached on the first acoustic material 81. The upper portion of the first acoustic material 81 is sandwiched between the upper tank protective cover 65 covering the upper tank 62 and the upper rib.

Namely, the upper portion of the first acoustic material 81 is sandwiched with the upper tank protective cover 65 covering the upper tank 62 and the radiator cover 70.

Accordingly, the number of components can be reduced without the special fixing members for fixing the upper portion of the first acoustic material 81. The misregistration of the upper portion of the first acoustic material 81 in the crank shaft direction is regulated. The first acoustic material 81 is suppressed to touch on the core surface 61f of the radiator 60. The cooling effect with cooling wind can be fully secured by keeping the space between the first acoustic material 81 and the core surface 61f.

Moreover, the sandwiched upper portion of the first acoustic material 81 can suppress the vibration of the radiator cover 70, and can prevent the noise caused by the vibration.

Moreover, the cooling wind inlet opening 77 is formed by bordering and below the lower end of the second sound barrier 76B to which the first acoustic material 81 is attached. Accordingly, the lower end portion of the first acoustic material 81 is on the position where the acoustic material is easily peeled and sucked to the inside in the crank shaft direction due to the intake air introduced from the cooling wind inlet opening 77, especially the strong intake air in the vicinity of the center of the cooling fan 48. The lower end portion of the first acoustic material 81 is engaged and held with the engage supporting pieces 79a, 79b. Accordingly, the lower end portion of the first acoustic material 81 can be regulated to move to the inside in the crank shaft direction and can be stably held.

Accordingly, it is possible to effectively prevent the first acoustic material 81 from touching on the core surface 61f of the radiator 60, to surely keep the space between the first acoustic material 81 and the core surface 61f, and to diffuse the intake air all over the core surface 61f. Accordingly, the radiator 60 can maintain the sufficient cooling function.

Moreover, the engage supporting pieces 79a, 79b hold the first acoustic material 81 attached to the sound barrier 76 (76A, 76B). Accordingly, the first acoustic material 81 can be easily attached.

With reference to FIG.7, the second acoustic material 82 is glued on the back surface of the lower portion side wall 72b of the radiator cover 70.

The second acoustic material 82 is not attached to the core surface opposite area S of the radiator cover 70, which is opposite to the core surface 61f of the radiator 60. Accordingly, the large opening area of the cooling wind inlet opening 77 can be secured, and the cooling function of the radiator 60 can be easily secured.

Moreover, the second acoustic material 82 is attached to the upper rib 78a formed and projected along the lower side of the core surface opposite area S of the radiator cover 70 in the lower direction. As shown in FIG.4, the second acoustic material is positioned opposite to the lower tank 63 of the radiator 60, and is sandwiched with the lower tank 63 and the radiator cover 70. The vibration of the radiator cover 70 can be suppressed, and the noise caused by the vibration can be prevented.

Moreover, when the lower tank protective cover covers the lower tank 63, the second acoustic material 82 is sandwiched with the lower tank protective cover and the radiator cover 70.

Moreover, as shown in FIG.7, a third acoustic material 83 is glued on the radiator cover 70 so as to be vertically long along the rear rib 78d between the core surface opposite area S on the back surface of the middle side wall 72c and the rear rib 78d. As well as the second acoustic material 82, the third acoustic material 83 is not attached to the core surface opposite area S of the radiator cover 70, which is opposite to the core surface 61f of the radiator 60. Accordingly, the large opening area of the cooling wind inlet opening 77 can be secured, and the cooling function of the radiator 60 can be easily secured.

Then, the noise leaking out to the rear direction of the internal combustion engine 31 is absorbed, especially, the noise reaching to the pillion passenger siting on the pillion passenger seat 19b can be further decreased.

With reference to FIG.2, a front lower bolt 92 is one of the three fastening bolts 92 which fasten the radiator cover 70 covering the radiator 60 to the mounting bracket 52a of the shroud 50, and is fastened in the front direction of the cooling wind inlet opening 77 of the radiator cover 70. The front lower bolt is also fastened to the fastening boss portion 74a provided on the bottom wall of the recessed portion 74b further recessed than the outside surface of the middle side wall 72c of the radiator cover 70.

Therefore, as shown in FIG.6, the head portion of the bolt 92 is provided on the recessed portion 74b and is not projected from the outside surface of the radiator cover 70 to the outward. The intake resistance of the traveling wind introduced to the cooling wind inlet opening 77 can be decreased. Even if the opening area of the cooling wind inlet opening 77 is formed small, the efficient intake of the cooling wind enables to maintain the cooling function of the radiator 60.

In the present embodiment 1, the sound barrier 76 (76A, 76B) covers almost of the portion of the core surface opposite area S of the radiator cover 70 except the front portion of the upper area of the cooling wind inlet opening 77 than the crank axis C. The sound barrier 76 (76A, 76B) may cover all of the portion. The noise can be further decreased.

Simultaneously, the cooling wind for the cooling wind inlet opening 77 below the crank axis C can be introduced to the radiator cover 70.

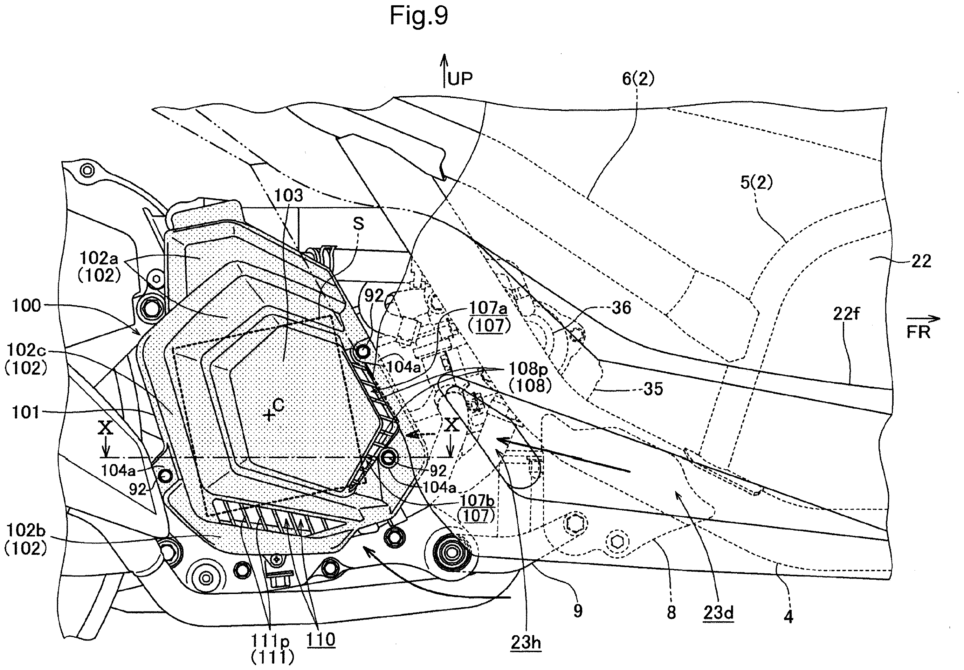

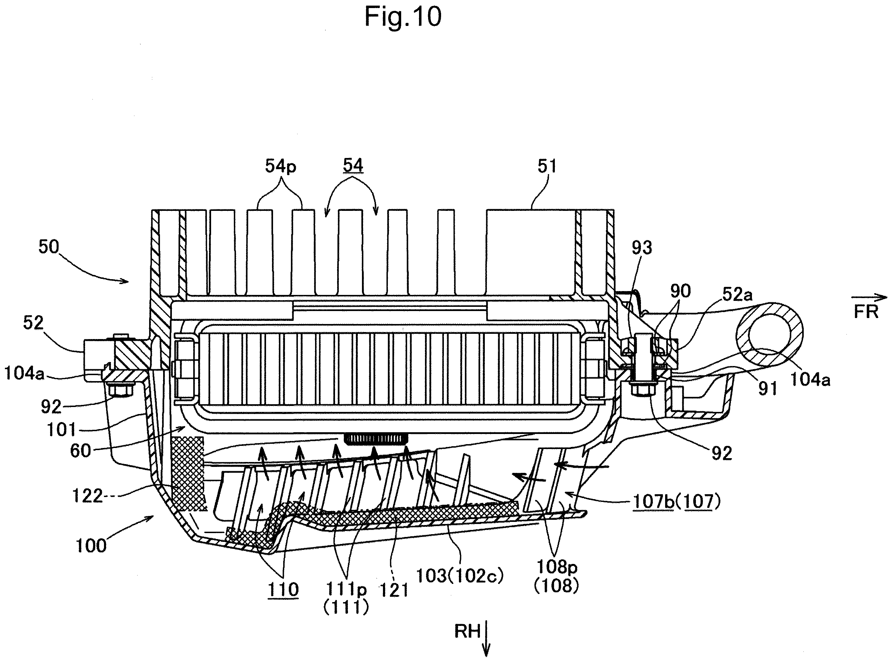

Next, as for the cooling apparatus of the internal combustion engine for straddle type vehicle in the embodiment 2 of the present invention will be explained based on FIGs.9, 10.

The present embodiment 2 are the same as the embodiment 1 except the portions which are different from the related portions to the radiator cover 100 in the above-mentioned embodiment 1, the same numeral numbers and signs are used for the members except the related portions to the radiator cover 100, and the explanation will be omitted.

A radiator cover 100 is generally configured with a cover outer periphery wall 101 approximately along the outline of the radiator 60 in the side view and a cover side wall 102 which is opposite to the right surface of the radiator 60, and has a similar outer shape to the radiator cover 70 in the embodiment 1.

The cover side wall 102 has an upper portion side wall 102a which is opposite to the upper tank 62, a lower portion side wall 102b which is opposite to the lower tank 63, and a middle side wall 102c which is opposite to the core 61. Fastening boss portions 104a, 104a are vertically formed on the front portion of the middle side wall 102c. The fastening boss portion 104a is formed on the rear portion of the middle side wall 102c so as to bulge. The place and the shape of the fastening bosses are same as the ones in the embodiment 1. The fastening boss portions 104a, 104a, 104a, are fastened with the bolts 92 and the nuts 93 to the mounting brackets 52a, 52a, 52a of the shroud 50, respectively.

As for the present cover side wall 102 of the radiator cover 100, the middle side wall 102c and the lower portion side wall 102b are bulged to the right direction, compared with the upper portion side wall 102a (see FIG.10). A cooling wind inlet opening 107 is provided on the front wall provided so as to stand up to the right direction on the front portion of the bulging middle side wall 102c, and is faced and opened to the approximately front direction.

As shown in FIG.9, the cooling wind inlet opening 107 is vertically long and bends at the middle level. An upper cooling wind inlet opening 107a above the bending portion is inclined downward to the front direction. A lower cooling wind inlet opening 107b below the bending portion is inclined downward to the rear direction. As a whole, the cooling wind inlet opening forms a V-shape.

Moreover, a plurality of blades 108p of a louver 108 are vertically arranged in parallel each other in an approximately horizontal posture on the cooling wind inlet opening 107.

Moreover, a cooling wind inlet opening 110 is provided so as to be opened obliquely downward to the right direction on the lower wall formed so as to stand up to the right direction at the lower portion (in the vicinity of the border with the lower portion side wall 102b) of the bulging middle side wall 102c of the cover side wall 102.

The cooling wind inlet opening 110 is longitudinally long.

A plurality of blades 111p of a louver 111 are longitudinally arranged in an approximately parallel each other in an approximately vertical posture on the cooling wind inlet opening 110.

In a side view shown in FIG.9, the core surface opposite area S of a radiator cover 100, which is opposite to the core surface 61f of the core 61 of the radiator 60, is shown as a rectangular shape frame in a thick broken line, and the position of the crank axis C of the crank shaft 40 is shown in a cross.

With reference to FIG.9, the radiator cover 100 is configured such that almost of the center area except the front and rear of the middle side wall 102c is approximately overlapped with the core surface opposite area S.

Almost of the portion where the middle side wall 102c is overlapped with the core surface opposite area S forms the side wall. The side wall forms a sound barrier 103.

The sound barrier 103 is extended in the front direction until it reaches to the cooling wind inlet opening 107 which is vertically long and bent in a V-shape, and is extended in the lower direction until it reaches to the cooling wind inlet opening 110 which is longitudinally long.

Then, the lower end portion of the lower cooling wind inlet opening 107b is slightly opened at the front lower angular portion of the core surface opposite area S, the rear end portion of the cooling wind inlet opening 110 is opened in the vicinity of the rear lower angular portion of the core surface opposite area S.

In the side view shown in FIG.9, the sound barrier 103 is formed on at least all of the upper portion of the radiator cover 100 than the crank axis C of the core surface opposite area S which is opposite to the core surface 61f of the radiator 60.

More specifically, the cooling wind inlet opening does not exist in the upper portion than the crank axis C of at least the core surface opposite area S. Accordingly, the opening area of the cooling wind inlet opening at the upper area becomes zero.

Accordingly, in the upper area, the area of the sound barrier 103 is larger than the opening area of the cooling wind inlet opening (the opening area = 0). The sound barrier 103 blocks the noise leaking out to the upper direction of the internal combustion engine 31 and the noise can hardly reach to the passenger sitting on the passenger seat 19, which can improve the driving comfort.

Moreover, the sound barrier 103 is also provided almost of the lower area of the core surface opposite area S than the crank axis C. Accordingly, the noise is further decreased.

As mentioned above, the present radiator cover 100 is configured such that the sound barrier 103 is provided on almost of the core surface opposite area S so as to reduce the noise as much as possible. Simultaneously, the radiator cover is configured such that the respective cooling wind inlet openings 107, 110 are formed on the front direction and the lower direction of the core surface opposite area S, and the cooling wind is surely introduced inside the radiator cover 100.

With reference to FIG.9, the cooling wind inlet opening 107 in front of the core surface opposite area S is positioned in the rear direction of the wind guiding recessed portion 23d formed on the floor skirt 23 below the step floor 22f of the floor side cover 22, and is positioned in the rear direction of the air guiding opening 23h.
Accordingly, while traveling, the traveling wind flowing along the floor skirt 23 on the lower portion of the vehicle body. As shown in a thick arrow in FIG.9, the traveling wind is guided by the wind guiding recessed portion 23d and is flown from the air guiding opening 23h to the rear direction, and is efficiently introduced to the cooling wind inlet opening 107 of the radiator cover 100, which is opened to the front direction.

The cooling wind inlet opening 107 is bent in a V-shape, and has the upper cooling wind inlet opening 107a inclined downward to the front direction and a lower cooling wind inlet opening 107b inclined downward to the rear direction. Accordingly, the cooling wind inlet opening can be designed with a larger opening area, compared with the cooling wind inlet opening with the same vertical width, which is linearly formed in the vertical direction. Accordingly, it is possible to increase the introducing amount of the traveling wind inside the radiator cover 100.

With reference to the side view in FIG.9, the radiator cover 100 has the bending portion of the cooling wind inlet opening 107 positioned at the approximately same level with the crank axis C in the front direction, the upper cooling wind inlet opening 107a inclined downward to the front direction above the crank axis C, and the lower cooling wind inlet opening 107b inclined downward to the rear direction below the crank axis C. Accordingly, the bend portion is apart from the crank axis C of the center of the core surface opposite area S to the front direction. The sound barrier 103 is formed so as to be widely extended around the crank axis C in the side view.

Accordingly, the noise of the internal combustion engine 31 can be effectively decreased.

Moreover, as shown in FIG.9, the front cooling wind inlet opening formed on the front cover half portion in the further front direction than the crank axis C has a larger opening area than the rear cooling wind inlet opening formed on the rear cover half portion in the further rear direction than the crank axis C.
In the cover front half portion, the upper cooling wind inlet opening 107a is formed above the crank axis C on the center of the core surface opposite area S, and the lower cooling wind inlet opening 107b is formed below the crank axis of on the center of the core surface opposite area. Accordingly, the introduced cooling wind can be widely and entirely diffused as wide as the vertical width of the core 61 of the radiator 60 from the front side portion to the rear side portion, and the cooling function of the radiator 60 can be further improved.

As shown in FIG.9, the lower cooling wind inlet opening 107b formed on the cover lower half portion below the crank axis C has a larger opening area than the upper cooling wind inlet opening 107a formed on the cover upper half portion above the crank axis C.
The cooling wind inlet opening 110 below the core surface opposite area S of the cover lower half portion is positioned slightly higher than the lower end edge of the floor skirt 23.

Accordingly, while traveling, the traveling wind flowing along the lower end edge of floor skirt 23 on the lower portion of the vehicle body. As shown in the thick arrow in FIG.9, the traveling wind changes the direction to the obliquely upward at the rear end of the lower end edge of the floor skirt 23 along the curved surface curving obliquely upward and flows to the rear direction, and is efficiently introduced to the cooling wind inlet opening 110 opened to obliquely downward to the right direction.

As shown in FIG.10, the sound insulation effect can be further improved due to the fact that acoustic materials 121, 122 and the like are attached to the back surface main area of the radiator cover 100, at least on the back surface of the sound barrier 103.

Moreover, in the present embodiment 2, the cooling wind inlet opening 107 in front of the core surface opposite area S is bent at the one spot in a V-shape, however, may be bent at more than two spots in a polygon.

As mentioned above, the cooling apparatus of the internal combustion engine for straddle type vehicle according to the present invention has been explained in the two embodiments. However, the mode of the present invention is not limited to the above-mentioned embodiment. Various embodiments may be applied within the scope of the present invention.

For example, as for the radiator covers 70, 100 in the embodiments 1, 2, another cooling wind inlet opening opened to the rear direction may be formed on the rear wall which is formed so as to stand up rightward on the rear portion of the bulging middle side walls 72c, 102c of the cover side walls 72,102.

The cooling wind inlet opening is also provided on the rear wall which is not the core surface opposite area S of the radiator covers 70, 100. Accordingly, the suction by the cooling fan 48 can increases the introducing amount of the fresh air inside the radiator covers 70, 100. The cooling function of the radiator 60 can be further improved.

Moreover, the floor skirt 23 disclosed in the embodiments 1, 2 has the air guiding opening 23h pierced on the wind guiding recessed portion 23d and the frontward facing wall surface of the rear end of the wind guiding recessed portion 23d. The rear end opening of the wind guiding recessed portion 23d may be set as the air guiding opening in the state that the rear end of the wind guiding recessed portion 23d is recessed and extended without setting as the wall surface.

Moreover, the shroud 50 is configured as the separate body from the right crank case 32R. However, it is possible that the shroud is configured so as to cover the outer periphery of the cooling fan by extending the right crank case 32R.

Furthermore, the upper tank 62 or the lower tank 63 of the radiator 60 may be configured with metal instead of resin.

A straddle type vehicle in the present invention is not limited to the motorcycle 1 in the embodiment, for example, may be a various kind of straddle type vehicle including a scooter type motorcycle, a three-wheel vehicle, and a four-wheeled buggy car, which may be a straddle type vehicle satisfies the requirement in Claim 1.

Moreover, for the convenience, the right and left arrangement of each apparatus is specifically mentioned on what is explained in the drawings. However, the present invention may include the arrangement opposite to what is shown in the above-mentioned embodiment.

### [Description of Reference Numerals]

1...straddle type motorcycle, 2...body frame, 19...passenger seat, 22...floor side cover, 22f...step floor, 23...floor skirt, 23d...wind guiding recessed portion, 23h...air guiding opening, 30...power unit, 31...internal combustion engine, 32...crank case, 40...crank shaft, 45...AC generator, 48...cooling fan, 50...shroud, 51...cylindrical portion, 52...outer periphery flange portion, 53...inner periphery flange portion, 54...discharge port, 60...radiator, 61...core , 62...upper tank, 63...lower tank, 65...upper tank protective cover, 70...radiator cover, 71...cover outer periphery wall, 72...cover side wall, 72c...middle side wall, 73...frame wall, 74a...fastening boss portion , 74b...recessed portion, 75...louver, 75p...blade, 76...sound barrier, 77...cooling wind inlet opening, 79a, 79b...engage supporting piece, 81...first acoustic material, 82...second acoustic material, 100...radiator cover, 101...cover outer periphery wall, 102...cover side wall, 103...sound barrier, 104a...fastening boss portion, 107...cooling wind inlet opening, 108...louver, 108p...blade, 110...cooling wind inlet opening, 111...louver, 111p...blade, 121, 122...acoustic material.

## Claims

1. A cooling apparatus of an internal combustion engine for straddle type vehicle comprising:
a crank case (32) of an internal combustion engine (31) disposed below a passenger seat (19) of the straddle type vehicle;
a cooling fan (48) provided on an end portion of a crank shaft (40) which is directing the width direction of the vehicle and is rotatably supported on the crank case (32);
a radiator (60) disposed such that said cooling fan (48) is opposite to a core surface (61f);
a radiator cover (70, 100) covering said radiator (60) from the outside in the width direction of the vehicle, simultaneously on which cooling wind inlet openings (77, 107, 110) introducing the cooling wind from the outside are formed; and
sound barriers (76, 103) formed on a part of or all of the upper area than a crank axis (C), out of core surface opposite area (S) of said radiator covers (70, 100) which is opposite to the core surface (61f) of said radiator (60) in the side view,
wherein said cooling wind inlet openings (77, 107, 110) are formed on the area except said sound barriers (76, 103) in said radiator covers (70, 100), and
wherein the area of said sound barriers (76, 103) is larger than the opening area of said cooling wind inlet openings (77, 107, 110), at least at the upper area than said crank axis (C) in the core surface opposite area (S),
**characterized in that** at least one sound barrier (76) comprises a first sound barrier (76A) configured with the middle side wall (72c) of the radiator cover (70) including a frame wall (73) and a plurality of blades (75p) inside the core surface opposite area (S), and a second sound barrier (76B) formed between the plurality of blades (75p) inside the frame wall (73).

2. The cooling apparatus of the internal combustion engine for straddle type vehicle according to Claim 1, **characterized in that**
out of said cooling wind inlet openings (77, 107, 110) of said radiator cover (70, 100), the front cooling wind inlet openings formed on the front cover half portion in the further front direction than the crank axis (C) have a larger opening area than the rear cooling wind inlet openings formed on the rear cover half portion in the further rear direction than the crank axis (C).

3. The cooling apparatus of the internal combustion engine for straddle type vehicle according to Claims 1 or 2, **characterized in that**
the lower cooling wind inlet openings formed on the cover lower half portion below the crank axis (C) have a larger opening area than the upper cooling wind inlet openings formed on the cover upper half portion above the crank axis (C) of said cooling wind inlet openings (77, 107, 110) of said radiator cover (70, 100).

4. The cooling apparatus of the internal combustion engine for straddle type vehicle according to Claim 3, **characterized in that**
a footrest floor portion (22f) which forms a part of body cover (22) is provided in front of said radiator cover (70, 100), and at least a part of said lower cooling wind inlet openings is positioned below said footrest floor portion (22f).

5. The cooling apparatus of the internal combustion engine for straddle type vehicle according to any one of Claims 1 to 4, **characterized in that**
acoustic materials (81, 121) are attached at least to the inside surface of said sound barriers (76,103) in the width direction of the vehicle.

6. The cooling apparatus of the internal combustion engine for straddle type vehicle according to Claim 5, **characterized in that**
holding portions (79a, 79b) holding the acoustic material (81) are formed on the inside surface of said sound barrier (76) in the width direction of the vehicle so as to regulate the movement of said acoustic material (81) in the crank shaft direction.

7. The cooling apparatus of the internal combustion engine for straddle type vehicle according to Claim 6, **characterized in that**
said holding portions (79a, 79b) engage and hold at least the lower end portion of said acoustic material (81).

8. The cooling apparatus of the internal combustion engine for straddle type vehicle according to any one of Claims 5 to 7,**characterized in that**
said radiator (60) has an upper tank (62) above said core (61), and the upper portion of said acoustic material (81) is sandwiched with said upper tank (62) or an upper tank protective cover (65) covering said upper tank (62) and said radiator cover (70).

9. The cooling apparatus of the internal combustion engine for straddle type vehicle according to any one of Claims 5 to 8, **characterized in that**
said radiator (60) has a lower tank (63) below said core (61), a second acoustic material (82) is attached to the inside surface which is not oppose to the core surface (61f) of said radiator (60) of said radiator cover (70), and said second acoustic material (82) is sandwiched with said lower tank (63) or a lower tank protective cover covering said lower tank (63) and said radiator cover (70).

10. The cooling apparatus of the internal combustion engine for straddle type vehicle according to any one of Claims 1 to 3, **characterized in that**
a fastening boss portion (74a) provided in front of said cooling wind inlet openings (77, 107) of said radiator cover (70, 100) is formed on the bottom wall of a recessed portion (74b) further recessed than the outside surface of said radiator covers (70, 100).

11. The cooling apparatus of the internal combustion engine for straddle type vehicle according to any one of Claims 1 to 10, **characterized in that**
a louver (75) with a plurality of blades (75p) is provided on said cooling wind inlet openings (77).

12. The cooling apparatus of the internal combustion engine for straddle type vehicle according to Claim 11, **characterized in that**
said blades (75p) obliquely standing from said sound barrier (76) to the outward in the width direction of the vehicle are integrally formed with said sound barrier (76).

## Patentansprüche

1. Kühlgerät eines Verbrennungsmotors für ein Fahrzeug vom Grätschsitztyp, umfassend:
ein Kurbelgehäuse (32) eines Verbrennungsmotors (31), angeordnet unter einem Passagiersitz (19) des Fahrzeugs vom Grätschsitztyp;
einen Kühllüfter (48), der an einem Endbereich einer Kurbelwelle (40) vorgesehen ist, die eine Breitenrichtung des Fahrzeugs anzeigt und drehbar an dem Kurbelgehäuse (32) getragen ist;
einen Kühler (60), der derart angeordnet ist, dass der Kühllüfter (48) entgegengesetzt zu einer Kernoberfläche (61f) ist;
eine Kühlerabdeckung (70, 100), die den Kühler (60) von außen in der Breitenrichtung des Fahrzeugs abdeckt, an der gleichzeitig Kühlwindeinlassöffnungen (77, 107, 110) gebildet sind, die den Kühlwind von außen einführen; und
Schallbarrieren (76, 103), die an einem Teil oder der gesamten Fläche über einer Kurbelachse (C) von einer der Kernoberfläche entgegengesetzten Fläche (S) der Kühlerabdeckungen (70, 100) gebildet sind, die zu der Kernoberfläche (61f) des Kühlers (60) in der Seitenansicht entgegengesetzt ist,
wobei die Kühlwindeinlassöffnungen (77, 107, 110) an der Fläche ausgenommen die Schallbarrieren (76, 103) in den Kühlerabdeckungen (70, 100) gebildet sind, und wobei die Fläche der Schallbarrieren (76, 103) größer ist als die Öffnungsfläche der Kühlwindeinlassöffnungen (77, 107, 110), zumindest an der Fläche über der Kurbelachse (C) in der der Kernoberfläche entgegengesetzten Fläche (S),
**dadurch gekennzeichnet, dass**
wenigstens eine Schallbarriere (76) eine erste Schallbarriere (76A) umfasst, die konfiguriert ist mit der mittleren Seitenwand (72c) der Kühlerabdeckung (70) einschließlich einer Rahmenwand (73) und einer Mehrzahl von Schaufeln (75p) innerhalb der der Kernoberfläche entgegengesetzten Fläche (S), sowie eine zweite Schallbarriere (76B), die zwischen der Mehrzahl von Schaufeln (75p) innerhalb der Rahmenwand (73) gebildet ist.

2. Kühlgerät des Verbrennungsmotors für ein Fahrzeug vom Grätschsitztyp nach Anspruch 1, **dadurch gekennzeichnet, dass**
von den Kühlwindeinlassöffnungen (77, 107, 110) der Kühlerabdeckung (70, 100), die vorderen Kühlwindeinlassöffnungen, gebildet an dem Vorderabdeckungshalbbereich in der Richtung weiter vorne als die Kurbelachse (C) eine größere Öffnungsfläche haben als die hinteren Kühlwindeinlassöffnungen, gebildet an dem Hinterabdeckungshalbbereich in der Richtung weiter hinten als die Kurbelachse (C).

3. Kühlgerät des Verbrennungsmotors für ein Fahrzeug vom Grätschsitztyp nach Anspruch 1 oder 2, **dadurch gekennzeichnet, dass**
die unteren Kühlwindeinlassöffnungen, gebildet an dem unteren Abdeckungshalbbereich unter der Kurbelachse (C) eine größere Öffnungsfläche haben als die oberen Kühlwindeinlassöffnungen, gebildet an dem oberen Abdeckungshalbbereich über der Kurbelachse (C) der Kühlwindeinlassöffnungen (77, 107, 110) der Kühlerabdeckung (70, 100).

4. Kühlgerät des Verbrennungsmotors für ein Fahrzeug vom Grätschsitztyp nach Anspruch 3, **dadurch gekennzeichnet, dass**
ein Fussauflagebodenbereich (22f), der einen Teil einer Karosserieabdeckung (22) bildet, vor der Kühlerabdeckung (70, 100) bereitgestellt ist, und wenigstens ein Teil der unteren Kühlwindeinlassöffnungen unter dem Fussauflagebodenbereich (22f) positioniert ist.

5. Kühlgerät des Verbrennungsmotors für ein Fahrzeug vom Grätschsitztyp nach einem der Ansprüche 1 bis 4, **dadurch gekennzeichnet, dass**
akkustische Materialien (81, 121) wenigstens an die innere Oberfläche der Schallbarrieren (76, 103) in der Breitenrichtung des Fahrzeugs angebracht sind.

6. Kühlgerät des Verbrennungsmotors für ein Fahrzeug vom Grätschsitztyp nach Anspruch 5, **dadurch gekennzeichnet, dass**
Haltebereiche (79a, 79b), die das akkustische Material (81) halten, an der inneren Oberfläche der Schallbarriere (76) in der Breitenrichtung des Fahrzeugs derart gebildet sind, dass die Bewegung des akkustischen Materials (81) in der Kurbelwellenrichtung reguliert wird.

7. Kühlgerät des Verbrennungsmotors für ein Fahrzeug vom Grätschsitztyp nach Anspruch 6, **dadurch gekennzeichnet, dass**
die Haltebereiche (79a, 79b) wenigstens am unteren Endbereich des akkustischen Materials (81) angreifen und es halten.

8. Kühlgerät des Verbrennungsmotors für ein Fahrzeug vom Grätschsitztyp nach einem der Ansprüche 5 bis 7, **dadurch gekennzeichnet, dass**
der Kühler (60) einen oberen Tank (62) über dem Kern (61) hat, und der obere Bereich des akkustischen Materials (81) sandwichartig eingebaut ist mit dem oberen Tank (62) oder einer Schutzabdeckung (65) des oberen Tanks, die den oberen Tank (62) abdeckt, und der Kühlerabdeckung (70).

9. Kühlgerät des Verbrennungsmotors für ein Fahrzeug vom Grätschsitztyp nach einem der Ansprüche 5 bis 8, **dadurch gekennzeichnet, dass**
der Kühler (60) einen unteren Tank (63) unter dem Kern (61) hat, wobei ein zweites akkustisches Material (82) angebracht ist an der inneren Oberfläche, die nicht entgegengesetzt ist zu der Kernoberfläche (61f) des Kühlers (60), der Kühlerabdeckung (70), und wobei das zweite akkustische Material (82) sandwichartig eingefügt ist mit dem unteren Tank (63) oder einer Schutzabdeckung des unteren Tanks, die den unteren Tank (63) abdeckt, und der Kühlerabdeckung (70).

10. Kühlgerät des Verbrennungsmotors für ein Fahrzeug vom Grätschsitztyp nach einem der Ansprüche 1 bis 3, **dadurch gekennzeichnet, dass**
ein Befestigungsansatzbereich (74a), der vor den Kühlwindeinlassöffnungen (77, 107) der Kühlerabdeckung (70, 100) vorgesehen ist, an der Bodenwand eines ausgesparten Bereichs (74b) gebildet ist, weiter ausgespart als die äußere Oberfläche der Kühlerabdeckung (70, 100).

11. Kühlgerät des Verbrennungsmotors für ein Fahrzeug vom Grätschsitztyp nach einem der Ansprüche 1 bis 10, **dadurch gekennzeichnet, dass**
ein Gitter (75) mit einer Mehrzahl von Schaufeln (75p) an den Kühlwindeinlassöffnungen (77) vorgesehen ist.

12. Kühlgerät des Verbrennungsmotors für ein Fahrzeug vom Grätschsitztyp nach Anspruch 11, **dadurch gekennzeichnet, dass**
die Schaufeln (75p), die von der Schallbarriere (76) nach außen in der Breitenrichtung des Fahrzeugs stehen, integral mit der Schallbarriere (76) gebildet sind.

## Revendications

1. Appareil de refroidissement d'un moteur à combustion interne pour un véhicule de type à selle comprenant :
un carter-moteur (32) d'un moteur à combustion interne (31) disposé en dessous d'un siège passager (19) du véhicule de type à selle ;
un ventilateur de refroidissement (48) prévu sur une portion d'extrémité d'un vilebrequin (40) qui est orienté dans le sens de la largeur du véhicule et est supporté en rotation sur le carter-moteur (32) ;
un radiateur (60) disposé de sorte que ledit ventilateur de refroidissement (48) est opposé à une surface de noyau (61f) ;
un couvercle de radiateur (70, 100) couvrant ledit radiateur (60) depuis l'extérieur dans le sens de la largeur du véhicule, simultanément sur lequel des ouvertures d'entrée d'air de refroidissement (77, 107, 110) introduisant l'air de refroidissement depuis l'extérieur sont formées ; et
des barrières anti-bruit (76, 103) formées sur une partie ou la totalité de l'aire supérieure d'un axe de bras de manivelle (C), parmi une aire opposée de surface de noyau (S) desdits couvercles de radiateur (70, 100) qui est opposée à la surface de noyau (61f) dudit radiateur (60) dans la vue de côté,
dans lequel lesdites ouvertures d'entrée d'air de refroidissement (77, 107, 110) sont formées sur l'aire à l'exception desdites barrières anti-bruit (76, 103) dans lesdits couvercles de radiateur (70, 100), et
dans lequel l'aire desdites barrières anti-bruit (76, 103) est plus grande que l'aire d'ouverture desdites ouvertures d'entrée d'air de refroidissement (77, 107, 110), au moins au niveau de l'aire supérieure dudit axe de bras de manivelle (C) dans l'aire opposée de surface de noyau (S),
**caractérisé en ce que**
au moins une barrière anti-bruit (76) comprend une première barrière anti-bruit (76A) configurée avec la paroi latérale médiane (72c) du couvercle de radiateur (70) comportant une paroi de cadre (73) et une pluralité de lames (75p) à l'intérieur de l'aire opposée de surface de noyau (S), et une deuxième barrière anti-bruit (76B) formée entre la pluralité de lames (75p) à l'intérieur de la paroi de cadre (73).

2. Appareil de refroidissement du moteur à combustion interne pour un véhicule de type à selle selon la revendication 1, **caractérisé en ce que**
parmi lesdites ouvertures d'entrée d'air de refroidissement (77, 107, 110) dudit couvercle de radiateur (70, 100), les ouvertures d'entrée d'air de refroidissement avant formées sur la demi-portion de couvercle avant dans la direction plus en avant que l'axe de bras de manivelle (C) ont une aire d'ouverture plus grande que les ouvertures d'entrée d'air de refroidissement arrière formées sur la demi-portion de couvercle arrière dans la direction plus en arrière que l'axe de bras de manivelle (C).

3. Appareil de refroidissement du moteur à combustion interne pour un véhicule de type à selle selon les revendications 1 ou 2, **caractérisé en ce que**
les ouvertures d'entrée d'air de refroidissement inférieures formées sur la demi-portion inférieure de couvercle en dessous de l'axe de bras de manivelle (C) ont une aire d'ouverture plus grande que les ouvertures d'entrée d'air de refroidissement supérieures formées sur la demi-portion supérieure de couvercle au-dessus de l'axe de bras de manivelle (C) desdites ouvertures d'entrée d'air de refroidissement (77, 107, 110) dudit couvercle de radiateur (70, 100).

4. Appareil de refroidissement du moteur à combustion interne pour un véhicule de type à selle selon la revendication 3, **caractérisé en ce que**
une portion de plancher repose-pieds (22f) qui forme une partie de couvercle de carrosserie (22) est prévue à l'avant dudit couvercle de radiateur (70, 100), et au moins une partie desdites ouvertures d'entrée d'air de refroidissement inférieures est positionnée en dessous de ladite portion de plancher repose-pieds (22f).

5. Appareil de refroidissement du moteur à combustion interne pour un véhicule de type à selle selon l'une quelconque des revendications 1 à 4, **caractérisé en ce que**
des matériaux acoustiques (81, 121) sont attachés au moins à la surface intérieure desdites barrières anti-bruit (76, 103) dans le sens de largeur du véhicule.

6. Appareil de refroidissement du moteur à combustion interne pour un véhicule de type à selle selon la revendication 5, **caractérisé en ce que**
des portions de maintien (79a, 79b) maintenant le matériau acoustique (81) sont formées sur la surface intérieure de ladite barrière anti-bruit (76) dans le sens de largeur du véhicule de façon à réguler le déplacement dudit matériau acoustique (81) dans le sens de vilebrequin.

7. Appareil de refroidissement du moteur à combustion interne pour un véhicule de type à selle selon la revendication 6, **caractérisé en ce que**
lesdites portions de maintien (79a, 79b) s'enclenchent avec et maintiennent au moins la portion d'extrémité inférieure dudit matériau acoustique (81).

8. Appareil de refroidissement du moteur à combustion interne pour un véhicule de type à selle selon l'une quelconque des revendications 5 à 7, **caractérisé en ce que**
ledit radiateur (60) a un réservoir supérieur (62) au-dessus dudit noyau (61), et la portion supérieure dudit matériau acoustique (81) est enserrée avec ledit réservoir supérieur (62) ou un couvercle de protection de réservoir supérieur (65) couvrant ledit réservoir supérieur (62) et ledit couvercle de radiateur (70).

9. Appareil de refroidissement du moteur à combustion interne pour un véhicule de type à selle selon l'une quelconque des revendications 5 à 8, **caractérisé en ce que**
ledit radiateur (60) a un réservoir inférieur (63) en dessous dudit noyau (61), un deuxième matériau acoustique (82) est attaché à la surface intérieure qui n'est pas opposée à la surface de noyau (61f) dudit radiateur (60) dudit couvercle de radiateur (70), et ledit deuxième matériau acoustique (82) est enserré avec ledit réservoir inférieur (63) ou un couvercle de protection de réservoir inférieur couvrant ledit réservoir inférieur (63) et ledit couvercle de radiateur (70).

10. Appareil de refroidissement du moteur à combustion interne pour un véhicule de type à selle selon l'une quelconque des revendications 1 à 3, **caractérisé en ce que**
une portion de bossage de fixation (74a) prévue à l'avant desdites ouvertures d'entrée d'air de refroidissement (77, 107) dudit couvercle de radiateur (70, 100) est formée sur la paroi de dessous d'une portion en retrait (74b) plus en retrait que la surface extérieure desdits couvercles de radiateur (70, 100).

11. Appareil de refroidissement du moteur à combustion interne pour un véhicule de type à selle selon l'une quelconque des revendications 1 à 10, **caractérisé en ce que**
une persienne (75) avec une pluralité de lames (75p) est prévue dans lesdites ouvertures d'entrée d'air de refroidissement (77).

12. Appareil de refroidissement du moteur à combustion interne pour un véhicule de type à selle selon la revendication 11, **caractérisé en ce que**
lesdites lames (75p) se trouvant à l'oblique de ladite barrière anti-bruit (76) vers l'extérieur dans le sens de largeur du véhicule sont formées d'un seul tenant avec ladite barrière anti-bruit (76).
